# EUROPÄISCHE PATENTSCHRIFT

(11) **EP 0 701 384 B1**
(45) Veröffentlichungstag und Bekanntmachung des Hinweises auf die Patenterteilung: **02.01.2003**
(21) Anmeldenummer: 95113824.7
(22) Anmeldetag: 02.09.1995
(51) Int. Cl.: H04Q 11/04

(54) **System, Teilnehmereinrichtung, Zentrale und Verfahren für Video-on-Demand-Dienst**
System, subscriber equipment, central and method for video on demand
Système, équipement d'abonné, centrale et méthode pour vidéo à la demande

(30) Priorität: 09.09.1994 DE 4432282; 25.07.1995 DE 19527094
(43) Veröffentlichungstag der Anmeldung: 13.03.1996
(73) Patentinhaber: ALCATEL, 75008 Paris (FR)
(72) Erfinder: Orlamünder, Harald, D-71254 Ditzingen (DE); Beller, Dieter, D-70825 Korntal-Münchingen (DE); Banniza, Thomas Rolf, D-71282 Hemmingen (DE); Homann, Christian, D-71229 Leonberg (DE); Gosger-Heilmann, Klaus, D-70199 Stuttgart (DE); Wozny, Hans, D-71672 Marbach a.N. (DE)
(74) Vertreter: Brose, Gerhard, Dipl.-Ing.

(56) Entgegenhaltungen:
- EP-A- 0 513 763
- US-A- 5 341 474
- DELODDERE D ET AL: "INTERACTIVE VIDEO ON DEMAND" IEEE COMMUNICATIONS MAGAZINE, Bd. 32, Nr. 5, 1.Mai 1994, Seiten 82-88, XP000451098

## Beschreibung

Die Erfindung betrifft ein insbesondere für Multimediadienste, einschließlich eines Video-on-Demand-Dienstes, geeignetes System nach dem Oberbegriff des Anspruchs 1, eine dafür geeignete Teilnehmereinrichtung nach dem Oberbegriff von Anspruch 2, eine Zentrale nach dem Oberbegriff von Anspruch 3 und ein Verfahren zur Durchführung solcher Dienste nach dem Oberbegriff von Anspruch 4.

Bekannt sind hierfür Verteilnetze mit breitbandigen Hin-Kanälen zu Teilnehmern und schmalbandigen Rückkanälen zur Zentrale.

Es ist bekannt, solche Verteilnetze als gemeinsames Übertragungsmedium für verschiedene Dienste zu verwenden. Um die Dienste leicht voneinander trennen zu können, werden dabei oft verschiedene Frequenzkanäle verwendet, die völlig unabhängig voneinander sind. Grundlage ist dabei oft ein Fernsehverteilnetz, bei dem schon einige Frequenzkanäle mit frei zugänglichen Fernsehprogrammen belegt sind. In Zukunft werden immer mehr Fernsehprogramme nur bei Bedarf gesendet werden. Dies ist als Video on Demand im Gespräch. Hierfür sind zwingend Datenreduktionen erforderlich, weshalb nur digitale Verfahren als Endzustand angestrebt werden. Sowohl die Speicherung wie auch die Übertragung soll deshalb mittels der ATM-Technik (ATM = Asynchronous Transfer Mode) in Form von ATM-Zellen erfolgen.

Deshalb ist es erforderlich, auch die von den Teilnehmern in deren Rückkanälen kommenden Anforderungs- und sonstigen Signalisierdaten in ein ATM-Netz einzuführen.

Dies erfolgt erfindungsgemäß nach der Lehre der Ansprüche 1 bis 4.

Der Grundgedanke dabei ist, daß der Teilnehmer seine Nachrichten bereits in Form von ATM-Zellen erzeugt und diese transparent in einem ihm allein (zumindest für die Zeit der Signalisierung) zugeordneten Rückkanal überträgt.

Aus US 5,341,474 ist eine Lösung bekannt, die ebenfalls bis zum Teilnehmer hin und vor allem auch im Rückkanal mit ATM arbeitet. Hier wird jedem Teilnehmer eine ADSL (asymmetrical digital subscriber line), also eine eigene Leitung, zur Verfügung gestellt. Eine Zusammenfassung solcher Verbindungen ist nicht bekannt.

Weitere Ausgestaltungen sind den Unteransprüchen zu entnehmen.

Im folgenden wird die Erfindung anhand eines Ausführungsbeispiels unter Zuhilfenahme der beiliegenden Zeichnungen weiter erläutert.
- Figur 1: zeigt die Gesamtkonfiguration eines erfindungsgemäßen Systems.
- Figur 2: zeigt eine mögliche Frequenzaufteilung für das erfindungsgemäße System.
- Figur 3: zeigt die Zuordnung von ATM-Zellen zu synchronen Kanälen.
- Figur 4: zeigt einen Ausschnitt aus dem erfindungsgemäßen System, in dem die erfindungsgemäße Zentrale mit weiteren Details dargestellt ist.
- Figur 5: zeigt einen Ausschnitt aus der erfindungsgemäßen Zentrale mit weiteren Details.
- Figur 6: zeigt ein Blockschaltbild einer erfindungsgemäßen Teilnehmereinrichtung.

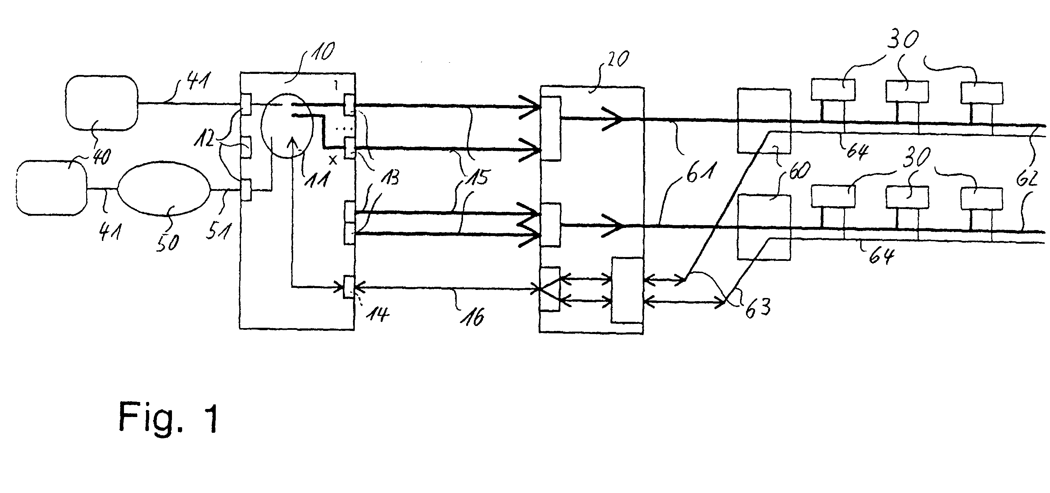

Das System nach Figur 1 weist eine ATM-Vermittlungsstelle 10, eine Vorfeld-Zentrale 20, mehrere Teilnehmereinrichtungen 30, zwei Abrufzentralen 40, ein Breitband-Fernmeldenetz 50 und zwei optische Breitband-Netzabschlußeinheiten 60 auf.

In der ATM-Vermittlungsstelle 10 ist ein Koppelfeld 11 angedeutet und einige ATM-Anschlußschaltungen 12, 13 und 14.

Eine der Abrufzentralen 40 ist über eine Anschlußleitung 41 an einer der ATM-Anschlußschaltungen 12 an die ATM-Vermittlungsstelle 10 angeschlossen. Die andere der beiden dargestellten Abrufzentralen 40 ist über eine Anschlußleitung 41 an eine nicht dargestellte ATM-Vermittlungsstelle des Breitband-Fernmeldenetzes 50 angeschlossen. Dieses wieder ist über eine Verbindungsleitung 51 mit einer weiteren ATM-Anschlußschaltung 12 der ATM-Vermittlungsstelle 10 verbunden.

Die ATM-Vermittlungsstelle 10 ist mit der Vorfeld-Zentrale 20 einerseits über mehrere einseitig vor der ATM-Vermittlungsstelle 10 zur Vorfeld-Zentrale 20 gerichtete ATM-Kanäle 15 und andererseits über einen zweiseitig gerichteten ATM-Kanal 16 verbunden.

Die Vorfeld-Zentrale 20 ist mit den optischen Breitband-Netzabschlußeinheiten 60 über je eine Breitbandverbindung 61 und eine Schmalbandverbindung 63 verbunden. Die Verbindungen führen von den Netzabschlußeinheiten 60 zu den Teilnehmereinrichtungen 30 als Breitbandverbindung 62 bzw. Schmalbandverbindung 64 weiter.

Als Abrufzentrale 40 wird eine Einrichtung verstanden, die im weitesten Sinn durch Fernbedienung zur Sendung ausgewählter Daten veranlaßt werden kann. Gedacht ist insbesondere an eine interaktive Fernbedienung im Rahmen eines Multimediadienstes, bei der die ersten Schritte der Fernbedienung die Auswahl eines Video-Servers zur Ausführung eines Video-on-Demand-Dienstes und die weiteren Schritte die Auswahl eines ganz bestimmten Videofilms betreffen. Der durch diese Fernbedienung ausgewählte Film wird anschließend per Datenübertragung zum Teilnehmer übertragen. Auch eine Fernbedienung über Sprachsteuerung ist nicht ausgeschlossen.

Die Datenübertragung soll in ATM erfolgen, weshalb auch die erforderlichen Anforderung- und sonstigen Signalisierungsdaten, d.h. die Fernbedienung, in ATM erfolgen soll.

Solche Abrufzentralen 40 können an beliebiger Stelle des Breiband-Fernmeldenetzes 50 angeordnet sein. Dieses muß nicht überall in ATM-Technik arbeiten. Jedenfalls der hier betrachteten ATM-Vermittlungsstelle 10 gegenüber muß dann gegebenenfalls eine Netzanpassung erfolgen.

Die ATM-Vermittlungsstelle 10 einschließlich des darin enthaltenen Koppelfeldes 11 und der darin enthaltenen ATM-Anschlußschaltungen 12, 13 und 14 sind nicht erfindungsspezifisch ausgestaltet. Allenfalls die Tatsache, daß die Anschlußschaltungen 12 überwiegend ankommenden und die Anschlußschaltungen 13 ausschließlich abgehenden Verkehr führen, könnte Anlaß zu einer besonderen Ausgestaltung sein.

Die Verbindungen zwischen der ATM-Vermittlungsstelle 10 und der Vorfeld-Zentrale 20 wurden hier bewußt etwas vage als Kanäle bezeichnet. Es kommt nicht darauf an, ob hier optische oder elektrische Übertragung erfolgt und ob nur eine Leitung mit einer Vielzahl von wellenlängen- oder frequenzmäßig getrennten Übertragungswegen oder ob mehrere optische oder elektrische Leitungen verwendet werden. Entsprechendes gilt für die "Verbindungen" zwischen der Vorfeld-Zentrale 20, der Netzabschlußeinheit 60 und den Teilnehmereinrichtungen 30.

Beim zugrundeliegenden Projekt soll im Bereich zwischen ATM-Vermittlungsstelle 10 und Netzabschlußeinheit 60 mit Glasfasern und im Bereich der Teilnehmer ab der Netzabschlußeinheit 60 mit Koaxialkabeln gearbeitet werden. Dabei sollen weitgehend bestehende Breitbandkabelnetze mit verwendet werden, wobei weiterhin Fernsehprogramme in herkömmlicher Weise mit übertragen werden sollen. Die Zusammenführung kann in der Vorfeld-Zentrale 20 oder in den Netzabschlußeinheiten 60 erfolgen. Für die Schmalbandverbindungen 64 könnten unter Umständen die bestehenden Telephonanschlußleitungen mit verwendet werden, im folgenden wird eine andere Möglichkeit aufgezeigt.

Die Teilnehmereinrichtungen 30 können entweder Schnittstelleneinrichtungen nach Art eines Modems als Beistelleinrichtung (auch Set Top Units genannt) zu Fernsehgeräten oder PCs sein oder auch Fernsehgeräte oder PCs mit solchen Schnittstelleneinrichtungen.

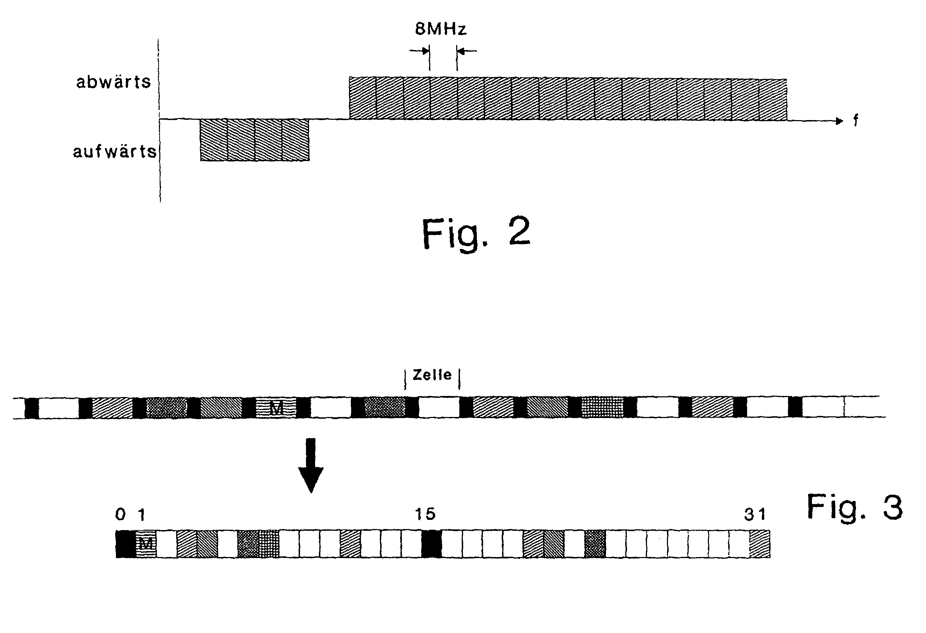

Figur 2 zeigt nun einen möglichen Frequenzplan für die Informationsübertragung zwischen den Netzabschlußeinheiten 60 und den Teilnehmereinrichtungen 30. Zugrundegelegt wird dabei ein Frequenzraster mit Kanälen mit 8 MHz Bandbreite, das derzeit auch für das analoge Fernsehen verwendet wird. Einige dieser Kanäle können und sollen auch bei diesem System der Verteilung von Fernsehprogrammen in analoger Form dienen. Einige andere dieser Kanäle sollen der Übertragung von Fernsehsignalen in digitaler Form dienen. Durch Verwendung redundanzreduzierender Verfahren z.B. nach dem MPEG-Standard (MPEG = Motion Picture Expert Group) und geeigneter Modulationsverfahren, z.B. 64-stufige Quadratur-Amplituden-Modulation, QAM64, lassen sich etwa fünf oder sechs Fernsehsignale in einem Kanal übertragen. Dies kann sowohl laufend zum Zwecke der Verteilung wie auch auf gezielten Abruf von einer Abrufzentrale erfolgen.

Nun soll nicht nur abwärts zu den Teilnehmern hin, sondern auch aufwärts zur Vorfeld-Zentrale hin Information zum Zwecke der Signalisierung oder Fernsteuerung übertragen werden. Hierzu sind einige Kanäle im unteren Frequenzbereich vorgesehen. Diese können ein gänzlich anderes Kanalraster aufweisen. Beispielsweise ist es möglich, jedem Teilnehmer einen eigenen Kanal mit eigenem Träger für ein Signal mit 64 kbit/s zuzuweisen. Beim zugrundeliegenden Projekt sind sechs Kanäle vorgesehen, von denen jeweils vier aktiv sind und zwei als Reserve dienen. Die aktiven Kanäle enthalten je ein PCM 30/32-Zeitmultiplexsignal mit 2 Mbit/s (genaugenommen 2048 kbit/s). Jeder dieser insgesamt 120 Zeitmultiplexkanäle mit je 64 kbit/s könnte nun fest einem Teilnehmer zugeordnet werden. Wie weiter unten noch dargelegt wird, insbesondere anhand der Figur 3, wird aber eine Betriebsweise bevorzugt, bei der erst bei Bedarf ein Kanal zugewiesen wird, dann aber gegebenenfalls auch mehrere. Statt Frequenz- oder Zeitmultiplex ist auch Codemultiplex möglich.

Da Fernbedienung bevorzugt anhand von Menüs interaktiv erfolgt, ist beim Beispiel noch einer der abwärts gerichteten 8 MHz-Kanäle der Steuerung vorbehalten. Hier wird mittels QAM64 ein ATM-Datenstrom ausschließlich für Signalisierung übertragen.

Diese frequenzmäßige Aufteilung hat den Vorteil, leicht an verschiedene Verhältnisse angepaßt werden zu können. Je nach vorhandener Infrastruktur und je nach organisatorischer Aufteilung von Diensten auf verschiedene Betreiber, aber auch abhängig beispielsweise von der Teilnehmerdichte, die dann wieder die Entfernungen beeinflußt und auch abhängig von der Verfügbarkeit von Technologie und Geräten können Aufwärts- und Abwärtsrichtungen gemeinsame oder getrennte Übertragungsmedien verwenden oder können weitere Dienste wie Verteildienste und Telephon mit eingebunden werden oder auch nicht.

Anhand der Figur 3 wird nun schematisch dargestellt, wie die Aufwärtsrichtung der Signalisierung zu denken ist. Die erste Zeile der Figur 3 zeigt einen ATM-Datenstrom bestehend aus aufeinanderfolgenden ATM-Zellen. Jede ATM-Zelle weist einen Zellkopf auf, der hier als schwarzer Block dargestellt ist und einen Informationsteil, der hier jeweils ein bestimmtes Muster trägt. Zellen, deren Informationsteil das gleiche Muster tragen, gehören demselben Datenstrom an. Zellen ohne Muster sind Leerzellen. Ihr Zellkopf weist sie als Leerzellen aus, ihr Informationsteil trägt keine Information.

Eine der Zellen ist durch ein "M" als Meta-Signalisierungs-Zelle gekennzeichnet. Durch die ITU-T Empfehlung Q.2120 wird ein Protokoll für die Signalisierung bei ATM empfohlen, das hier beispielhaft zugrundegelegt werden soll. Es wurde von der ITU veröffentlicht unter der Nummer COM 11-R 50-E im Februar 1994. Ein Meta-Signalisierungs-Kanal wird als Anrufkanal zur Verfügung gestellt, über den die Zuordnung individueller Signalisierungskanäle, sogenannter Signalling Virtual Channel (SVC) erfolgt.

Der in der Figur 3 in der ersten Zeile dargestellte ATM-Datenstrom ist zumindest im Teilnehmerbereich ein fiktiver Datenstrom. Jede einzelne der Teilnehmereinrichtungen 30 bereitet die von ihr ausgehende Signalisierung in Form solcher ATM-Zellen auf. Dabei wird im Zellkopf unter anderem der per Meta-Signalisierung zugeteilte Signalling Virtual Channel genannt. Die Übertragung zur Netzabschlußeinheit 60 über die Schmalbandverbindung 64 erfolgt aber nun nicht so, daß die einzelnen Teilnehmereinrichtungen der Reihe nach ihre zu sendenden Zellen in den Datenstrom einfügen. Vielmehr erfolgt diese Übertragung nun in synchroner Zeitmultiplextechnik, wie in der zweiten Zeile von Figur 3 dargestellt.

Diese zweite Zeile von Figur 3 zeigt einen einzelnen Zeitrahmen eines normalen PCM30/32-Datenstroms. Wie üblich, bilden je acht Bit einen Zeitschlitz. Die Zeitschlitze 0 und 15 sind nicht für die Datenübertragung frei. Sie sind hier, wie auch die Zellköpfe der Zellen in der ersten Zeile, als schwarze Blöcke dargestellt, haben aber mit diesen nichts zu tun. Der Zeitschlitz 1 ist für den o.g. Meta-Signalisierungs-Kanal reserviert, die Zeitschlitze 2 bis 14 und 16 bis 31 sind für "Signalling Virtual Channel" vorgesehen. Es ist nun erkennbar, daß die verschiedenen Schraffierungen aus der ersten Zeile auch in den verschiedenen Zeitschlitzen der zweiten Zeile auftreten. Schraffierungen, die in der ersten Zeile bei den Zellen häufig auftreten, treten dabei auch bei den Zeitschlitzen in der zweiten Zeile häufig auf.

Im Zuge der Zuordnung individueller Signalisierungskanäle, der SVCs, erfolgt auch die Vergabe der Zeitschlitze, wobei jedem SVC mindestens ein Zeitschlitz zugeteilt wird, unter Umständen auch mehrere Zeitschlitze. Innerhalb der jeweils zugeteilten Zeitschlitze erfolgt nun die Übertragung kompletter ATM-Zellströme mit ausschließlich kompletten Zellen einschließlich der Zellköpfe. Jede Teilnehmereinrichtung 30 sendet also, solange ihr Zeitschlitze zugeteilt sind, laufend einen ATM-Zellstrom mit möglicherweise darin enthaltenen Leerzellen aus. Sind mehrere Zeitschlitze demselben SVC zugeordnet, so werden sie bevorzugt der Reihe nach verwendet. Im gezeigten Beispiel sind die Zeitschlitze 3, 11, 20 und 31 gleich schraffiert und gehören damit demselben Datenstrom an und tragen damit aufeinanderfolgende Oktette dieses Datenstroms. Ein wesentlicher Punkt der Erfindung kommt bei dieser Darstellung nicht zum Ausdruck, nämlich die Tatsache, daß auch die Zellköpfe der ATM-Zellen in die Zeitschlitze mit eingereiht werden.

Für den Zugriff auf den Meta-Signalisierungs-Kanal im Zeitschlitz 1 ist jedes geeignete Zugriffsverfahren verwendbar. Derzeit vorgesehen ist das ALOHA-Verfahren, bei dem jede Teilnehmereinrichtung, die zu signalisieren wünscht, unkoordiniert einen entsprechenden Wunsch absetzt. Wenn eine Teilnehmereinrichtung allein sendet, so wird sie von der Gegenseite in der Vorfeld-Zentrale verstanden und erhält eine Antwort. Senden zwei Teilnehmereinrichtungen gleichzeitig, so stören sie sich gegenseitig, werden nicht verstanden und erhalten keine Antwort. Beide versuchen es dann mit zufälligen Verzögerungen erneut. Beim auch möglichen Pollingverfahren werden die Teilnehmereinrichtungen der Reihe nach abgefragt. Sind die Teilnehmereinrichtungen in einem Ring angeordnet, so kommt auch das TOKEN-Ring-Verfahren in Frage. Ein Zeichen ("Token") ist im Umlauf und wird von derjenigen Teilnehmereinrichtung angehalten, die den Meta-Signalisierungs-Kanal zu ergreifen wünscht. Anschließend wird das Zeichen weitergegeben. Bei insgesamt geringem zu erwartenden Signalisierungsaufwand könnte eines dieser Verfahren für die Signalisierung selbst verwendet werden, womit für alle Teilnehmer zusammen nur ein Kanal benötigt wird.

Je nach der Konfiguration der die Schmalbandverbindung 64 führenden Leitungen im Teilnehmeranschlußbereich ist auch der in der zweiten Zeile von Figur 3 gezeigte Zeitrahmen mehr oder weniger fiktiv. Durch geeignete Synchronisationsmaßnahmen, die an sich bekannt sind, muß jedenfalls dafür gesorgt werden, daß an der Netzabschlußeinheit die von den einzelnen Teilnehmereinrichtungen kommenden Signale sich zeitrichtig in den Rahmen einfügen.

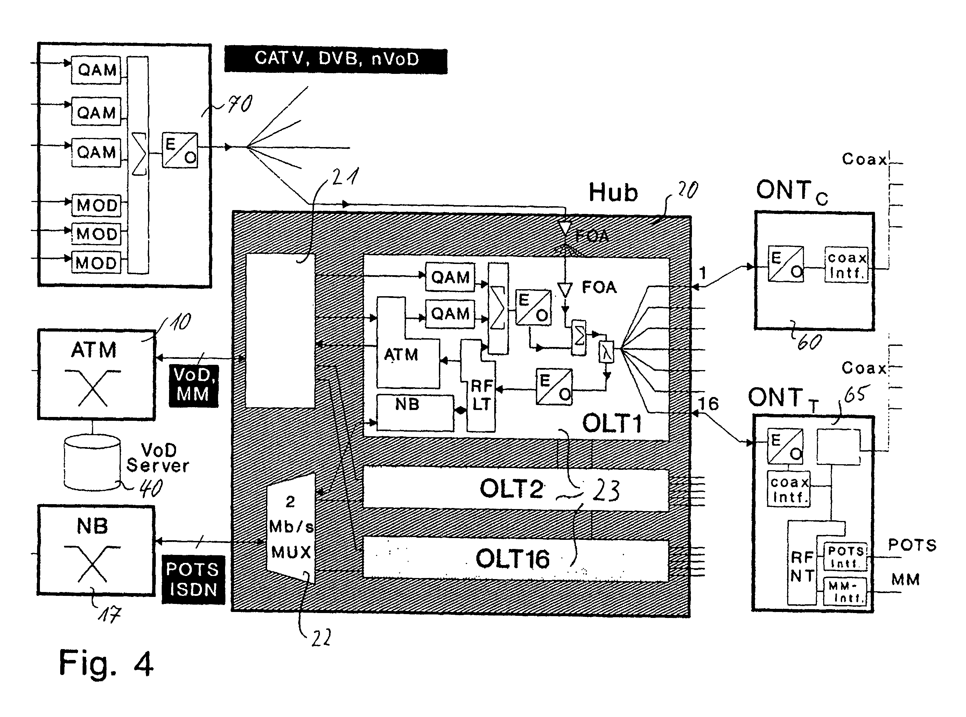

Anhand der Figur 4 wird nun noch das Gesamtsystem, abgesehen von den Teilnehmereinrichtungen, detaillierter beschrieben. Gezeigt ist die ATM-Vermittlungsstelle 10, die Vorfeld-Zentrale 20, eine der Abrufzentralen 40 und eine der optischen Breitband-Netzabschlußeinheiten 60 sowie eine Verteildienst-Zentrale 70, eine Schmalband-Vermittlungsstelle 17 und eine optische Breitband-Netzabschlußeinheit anderer Art 65. In der Vorfeld-Zentrale 20 sind ein ATM-Koppelnetz 21, ein Schmalband-Multiplexer 22 und mehrere optische Leitungsabschlußeinheiten 23 gezeigt.

Die Verteildienstzentrale 70 weist symbolisch mehrere Eingänge für Videosignale auf, die teils analog über Modulatoren MOD und teils digital mittels Quadratur-Amplituden-Modulatoren QAM in verschiedene Frequenzbänder umgesetzt, über einen Summierer zusammengefaßt und nach elektro-optischer Wandlung verteilt werden. Die Verteil-Dienste sind hier als CATV (cable TV), DVB (Digital Video Broadcasting) und nVoD (near Video on Demand) bezeichnet. Bei near Video on Demand werden ausgewählte Sendungen mit gestaffelten Anfangszeiten mehrfach gesendet. Die Verteilung ist hier durch Splitter dargestellt. Eine der vom Splitter abgehenden optischen Fasern geht hier zur Vorfeld-Zentrale ("Hub") 20. Das Signal wird zunächst in einem faseroptischen Verstärker FOA verstärkt und über einen weiteren Splitter den einzelnen Leitungsabschlußeinheiten (OLT1...OLT16) 23 zugeleitet. Dort werden sie wiederum verstärkt (FOA), mit anderen zu sendenden optischen Signalen in einem Summierer summiert und über eine wellenlängenselektive Richtungsweiche und einen weiteren Splitter an die angeschlossenen optischen Breitband-Netzabschlußeinheiten 60 und 65 und von dort über Koaxkabel Coax verteilt. Dazu wird es opto-elektrisch gewandelt und über ein Interface elektrisch angepaßt, im Fall der Netzabschlußeinheiten 65 auch noch gefiltert.

Über die ATM-Vermittlungsstelle 10 gelangen einerseits von der Abrufzentrale 40 (VoD Server) und andererseits vom Breitband-Fernmeldenetz 50 kommende Verbindungen zur Vorfeld-Zentrale 20. Abgesehen von den hier betrachteten Video-on-Demand- und anderen Multimedia-Diensten (VoD, MM) sind dies beliebige andere ATM-Verbindungen. In der Vorfeld-Zentrale 20 ist hier beispielhaft das ATM-Koppelfeld 21 vorgesehen, um die Verbindungen zwischen der ATM-Vermittlungsstelle und den einzelnen Leitungsabschlußeinheiten 23 herzustellen. Verbindungen, die der Signalisierung beispielsweise mit der Abrufzentrale 40 dienen, gelangen über ein ATM-Teil ATM und einen Quadratur-Amplituden-Modulator QAM zu einem Summierer und werden dort mit den breitbandigen Nutzsignalen (VoD, MM) summiert, die direkt über Quadratur-Amplituden-Modulatoren QAM kommen. Nach elektro-optischer Wandlung werden sie im schon erwähnten Summierer mit den Verteildienstsignalen zusammengeführt und mit diesen weiter verteilt.

Mit den beiden verschiedenen Netzabschlußeinheiten 60 und 65 sind auch verschiedene Möglichkeiten gezeigt, Breitband- und Schmalbandverbindungen 61 und 63 sowie 62 und 64 zu übertragen. Zwischen Vorfeld-Zentrale 20 und Netzabschlußeinheit 60 oder 65 werden sie in diesem Beispiel in getrennten Kanälen, aber auf gemeinsamen Leitungen geführt. In der Netzabschlußeinheit 60 werden sie nicht getrennt und deshalb auf gemeinsamer Leitung (Koaxkabel) zu den Teilnehmereinrichtungen geführt. In der Netzabschlußeinheit 65 dagegen erfolgt eine Trennung derart, daß die Breitbandverbindungen über die im Zusammenhang mit den Verteildienstsignalen genannten Filter zusammen mit den Verteildienstsignalen selbst auf die Koaxialkabel geführt werden, während die Schmalbandverbindungen über eine Hochfrequenz-Netzabschlußeinheit RFNT und eine Multimediaschnittstelle MM-Intf. auf separate Leitungen MM ausgekoppelt werden. Über diese Netzabschlußeinheit RFNT und eine Telephonschnittstelle POTS Intf. wird auch noch ein Anschluß für ein herkömmliches Telephon POTS (Plain Old Telephone System, "Gutes Altes Telephon") ausgekoppelt.

Die Schmalbandvermittlungsstelle 17 ist einerseits mit einem Schmalband-Fernmeldenetz (dem "normalen" Telephonnetz) und andererseits mit dem Schmalband-Multiplexer 22 in der Vorfeld-Zentrale 20 verbunden. Ob die Verbindung für analoges (Gutes Altes) Telephon POTS oder digitales Telephon ISDN ausgelegt ist oder beides zuläßt, sei hier dahingestellt. Auch die Frage, welche der dafür in Frage kommenden Techniken zur Übertragung von POTS verwendet wird, wird hier nicht näher untersucht. Der Multiplexer 22 stellt die Verbindung zu je einem Schmalband-Teil NB in den Leitungsabschlußeinheiten 23 her. Jedes Schmalband-Teil NB steht bidirektional mit einer Hochfrequenz-Leitungsabschlußeinheit RFLT in Verbindung. Die Hochfrequenz-Leitungsabschlußeinheit RFLT sendet in einem der anhand der Figur 2 beschriebenen Kanäle. Dieser Kanal wird in dem schon erwähnten Summierer mit den quadraturamplitudenmodulierten breitbandigen Nutzsignalen und der Signalisierung vom ATM-Teil ATM zusammengeführt. Das Signal der Gegenrichtung wird in der wellenlängenselektiven Richtungsweiche ausgekoppelt und nach opto-elektronischer Wandlung der Hochfrequenz-Leitungsabschlußeinheit RFLT zugeführt, von wo es über das Schmalband-Teil NB und den Multiplexer 22 zur Schmalbandvermittlungsstelle 17 gelangt.

Auch die Signalisierung von einer Teilnehmereinrichtung zur Abrufzentrale 40 nimmt bis zur Hochfrequenz-Leitungsabschlußeinheit RFLT denselben Weg und geht von dort über das ATM-Teil ATM, das Koppelnetz 21 und die ATM-Vermittlungsstelle 10.

Signalisierung zwischen einer der Teilnehmereinrichtungen und der Vorfeld-Zentrale 20 endet dort im ATM-Teil ATM. Eine solche Signalisierung dient vor allem der Zuteilung von Zeitschlitzen.

Auch im Bereich zwischen Vorfeld-Zentrale 20 und den Breitband-Netzabschlußeinheiten 60 und 65 ist eine Führung der Breitbandverbindungen 61 und der Schmalbandverbindungen 63 über getrennte (optische oder elektrische) Kabel möglich. Vorteilhaft ist dies dann, wenn die Signalisierung und andere Schmalbandsignale zum Teilnehmer hin auf ATM umgesetzt und in die Breitbandverbindungen hinein verlagert wird. Breitband- und Schmalbandverbindungen sind dann jeweils nur einseitig gerichtet. Dies ergibt eine verhältnismäßig einfache Technik.

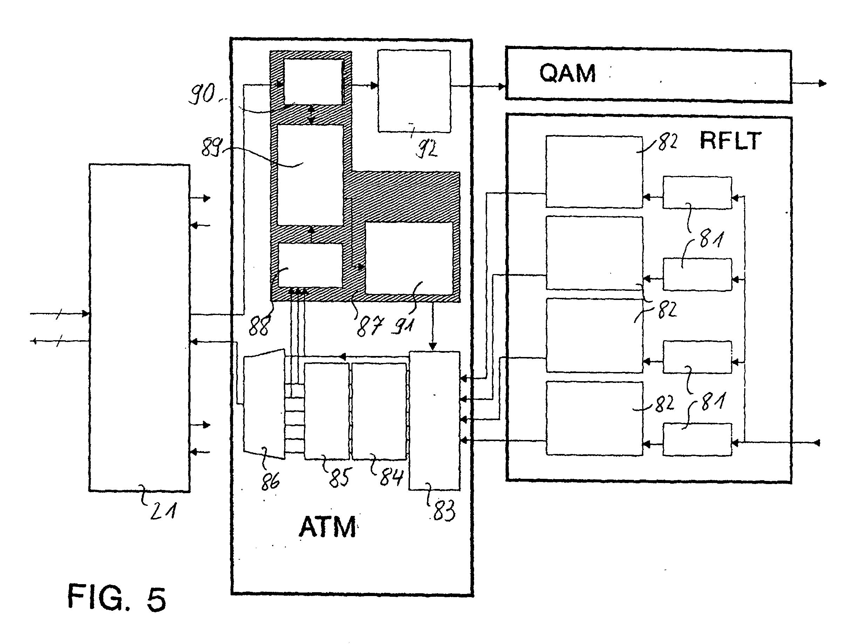

Anhand der Figur 5 werden nun weitere Details der Vorfeld-Zentrale 20 dargestellt. Figur 5 zeigt das ATM-Koppelnetz 21 und einen Ausschnitt aus einer optischen Leitungsabschlußeinheit 23 mit der Hochfrequenz-Leitungsabschlußeinheit RFLT, dem ATM-Teil ATM und dem vom ATM-Teil ATM abgehenden Quadratur-Amplituden-Modulator QAM.

Die Hochfrequenz-Leitungsabschlußeinheit RFLT weist für jeden der vier je einen Zeitmultiplexstrom tragenden Kanäle eine Empfangseinheit 81 mit Kanalfilter und Demodulator und eine Anpaßeinheit 82 auf. Die Anpaßeinheit 82 dient unter anderem der Synchronisation.

Im ATM-Teil ATM befindet sich eine Formatwandlereinheit 83, eine Entschlüsselungseinrichtung 84, ein Pufferspeicher 85, ein ATM-Multiplexer 86, eine Steuereinheit 87 mit einer Signalisierungs-Überwachungsschaltung 88, einer Signalisierungs-Bearbeitungsschaltung 89, einer Signalisierschaltung 90 und einer Zeitschlitz-Zuweisungschaltung 91 und eine Verschlüsselungseinrichtung 92.

Die Formatwandlereinheit 83 wandelt die vier Zeitmultiplexdatenströme in 120 Datenströme mit kompletten ATM-Zellen. Diese Datenströme werden in der Entschlüsselungseinrichtung 84 entschlüsselt und im Pufferspeicher 85 so gepuffert, daß sie im ATM-Multiplexer 86 zu einem normalen ATM-Datenstrom zusammengefaßt werden. ATM-Zellen, die ausweislich ihres Zellkopfs nicht an die ATM-Vermittlungsstelle weiterzureichen sind, werden vom ATM-Multiplexer nicht in den Datenstrom eingefügt. Dagegen werden freie Kapazitäten mit Leerzellen aufgefüllt.

Die Steuereinheit 87 hat die Aufgabe, die erfindungsgemäß gebildeten Rückkanäle zu bearbeiten. Dies wird besonders von der Signalisierungs-Bearbeitungsschaltung 89 durchgeführt. Ihr werden hierzu alle Kapazitäts-Anforderungen von Teilnehmereinrichtungen über die Signalisierungs-Überwachungsschaltung 88 und alle Kapazitätszuweisungen, die von der ATM-Vermittlungsstelle oder über diese kommen, von der Signalisierschaltung 90 gemeldet. Die Bearbeitungsschaltung 89 verwaltet damit die vier mal 30 zur Verfügung stehenden Zeitschlitze. Zuweisungen oder Rücknahmen von Zeitschlitzen werden einerseits der betroffenen Teilnehmereinrichtung über die Signalisierschaltung 90 in Form von ATM-Zellen signalisiert und andererseits über die Zeitschlitz-Zuweisungsschaltung 91 der Formatwandlereinheit 83.

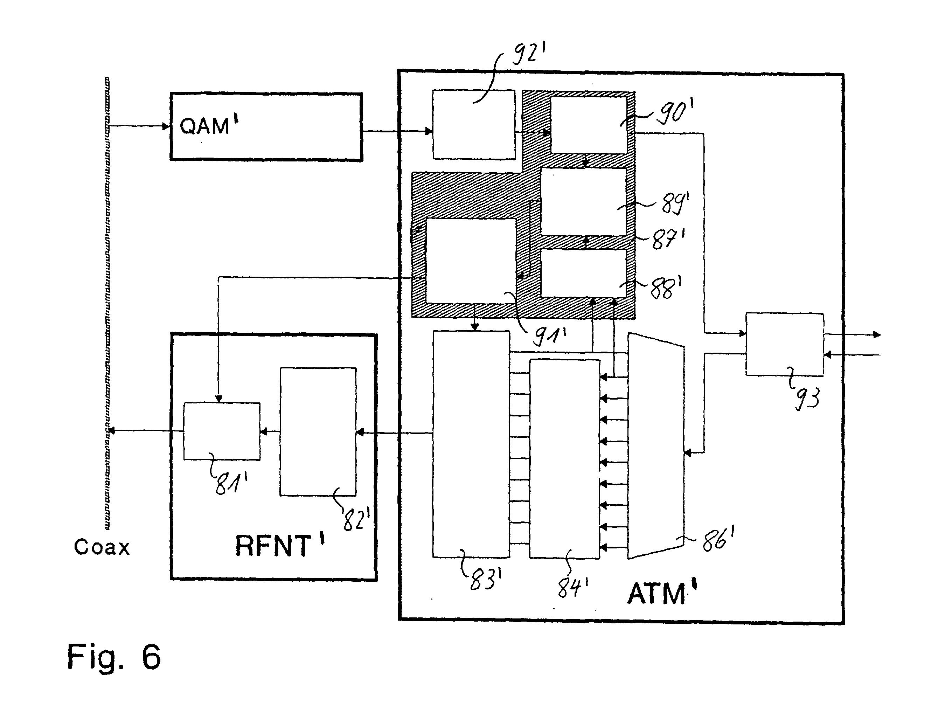

Anhand der Figur 6 wird noch eine Teilnehmereinrichtung insoweit beschrieben, als die Signalisierung betroffen ist. Der Weg der Nutzinformation ist hier nicht dargestellt. Hier wird ein Multimediagerät unterstellt, das von mehreren Gegenstationen Nutzinformation empfängt und deshalb auch zu mehreren Gegenstationen Steuerkanäle unterhält. Diese Einrichtung kann aber auch eine Schnittstellenschaltung sein, die für mehrere unabhängige Endgeräte die Signalisierung bearbeitet. Als Einrichtung für ein einfaches Endgerät mit nur einer Gegenstation entfallen im unteren Teil die parallelen Verarbeitungswege.

Figur 6 ist praktisch das Spiegelbild zu Figur 5; einander entsprechende Teile sind auch mit einander entsprechenden Bezugszeichen versehen. Figur 6 zeigt einen Demodulator QAM' für Quadratur-Amplituden-Modulation, eine Hochfrequenz-Netzabschlußeinheit RFNT' und ein ATM-Teil ATM'. Der Demodulator QAM' und die Netzabschlußeinheit RFNT' sind eingangs- bzw. ausgangsseitig an das Koaxialkabel Coax angeschlossen.

Die Netzabschlußeinheit RFNT' weist eine Anpaßeinheit 82' und eine Sendeeinheit 81' mit Modulator und Frequenzumsetzer auf.

Das ATM-Teil ATM' weist eine Schnittstellenschaltung 93, einen ATM-Demultiplexer 86', eine Verschlüsselungseinrichtung 84', eine Formatwandlereinheit 83', eine Steuereinheit 87' mit einer Signalisierungs-Überwachungsschaltung 88', einer Signalisierungs-Berechnungsschaltung 89', einer weiteren Signalisierungs-Überwachungsschaltung 90' und einer Zeitschlitzund Kanal-Zuweisungsschaltung 91' und eine Entschlüsselungseinrichtung 92' auf.

Im Gegensatz zur Signalisierungs-Bearbeitungsschaltung 89 in der Vorfeld-Zentrale gibt die Signalisierungs-Berechnungsschaltung 89' hier keine Anweisungen, sondern führt nur aus. Sie überwacht deshalb nur beide Richtungen, ohne selbst Signale einzufügen. Allerdings wird hier davon ausgegangen, daß teilnehmerseitig nur ein einziger Zeitmultiplexstrom zur Verfügung steht. Deshalb muß auch der Frequenzumsetzer in der Sendeeinheit 81' noch abgestimmt werden.

## Patentansprüche

1. System, insbesondere für Multimediadienste (MM) einschließlich eines Video-on-Demand-Dienstes (VoD), mit einer Zentrale (20, Hub), einem Verteilnetz (61,..., 64; Coax) und daran angeschlossenen Teilnehmereinrichtungen (30), mit breitbandigen Kanälen (61, 62) von der Zentrale zu den Teilnehmereinrichtungen und schmalbandigen Rückkanälen (63, 64) von den Teilnehmereinrichtungen zur Zentrale, bei dem jede rückkanalfähige Teilnehmereinrichtung (30) eine Sendeeinrichtung (81', 82', 83', 86') aufweist, mittels derer aus den an die Zentrale zu sendenden Nachrichten ein aus ATM-Zellen bestehender Datenstrom gebildef und in einen dieser Teilnehmereinrichtung zugeordneten Rückkanal umgesetzt und in das Verteilnetz (Coax) eingespeist wird, bei dem die Zentrale (20, Hub) Empfangseinrichtungen (RFLT, ATM) aufweist, mittels derer jeweils der Datenstrom eines Rückkanals als Folge von ATM-Zellen rückgewonnen und zwischengespeichert wird und bei dem die Zentrale einen Multiplexer (86) aufweist, der die einzelnen Datenströme zu einem Gesamt-ATM-Datenstrom zusammenfaßt, **dadurch gekennzeichnet, daß** Mittel vorhanden sind, um mehrere Rückkanäle gemeinsam in synchroner Zeitmultiplextechnik zu übertragen, wobei innerhalb der jeweils zugeteilten Zeitschlitze die Übertragung kompletter ATM-Zellströme mit ausschließlich kompletten Zellen einschließlich der Zellköpfe erfolgt.

2. Teilnehmereinrichtung (30), insbesondere für Multimediadienste (MM) einschließlich eines Video-on-Demand-Dienstes (VoD), mit einer Empfangseinrichtung zur Auswahl eines von mehreren breitbandigen Kanälen und zum Empfang eines darin übertragenen breitbandigen Datenstroms, bei dem eine Sendeeinrichtung (81', 82', 83', 86') vorhanden ist, mittels derer aus der an eine Zentrale (20, Hub) zu sendenden Nachrichten ein aus ATM-Zellen bestehender Datenstrom gebildet und in einen der Teilnehmereinrichtung zugeordneten schmalbandigen Rückkanal umgesetzt und in das Verteilnetz (Coax) eingespeist wird, **dadurch gekennzeichnet, daß** die Sendeeinrichtung so ausgebildet ist, daß sie den Rückkanal derart aussendet, daß er mit mehreren Rückkanälen anderer Teilnehmereinrichtungen gemeinsam in synchroner Zeitmultiplextechnik übertragen wird, wobei innerhalb der jeweils zugeteilten Zeitschlitze die Übertragung kompletter ATM-Zellströme mit ausschließlich kompletten Zellen einschließlich der Zellköpfe erfolgt.

3. Zentrale (20, Hub), für ein System nach Anspruch 1, die Empfangseinrichtungen (RFLT, ATM) aufweist, mittels derer jeweils der Datenstrom eines schmalbandigen Rückkanals als Folge von ATM-Zellen rückgewonnen und zwischengespeichert wird und die einen Multiplexer (86) aufweist, der die einzelnen Datenströme zu einem Gesamt-ATM-Datenstrom zusammenfaßt, **dadurch gekennzeichnet, daß** die Empfangseinrichtungen derart ausgebildet sind, daß sie die einzelnen Rückkanäle aus einem mehreren Rückkanälen gemeinsamen synchronen Zeitmultiplex wiedergewinnt, wobei der synchrone Zeitmultiplex so ausgestaltet ist, daß innerhalb der jeweils zugeteilten Zeitschlitze die Übertragung kompletter ATM-Zellströme mit ausschließlich kompletten Zellen einschließlich der Zellköpfe erfolgt.

4. Verfahren für ein System nach Anspruch 1, bei dem in Hinkanälen (61, 62) breitbandig Informationen an Teilnehmereinrichtungen (30) gesendet werden und bei dem die Teilnehmereinrichtungen in schmalbandigen Rückkanölen (63, 64) Nachrichten an eine Zentrale (20, Hub) senden, insbesondere zur Auswahl der an sie in einem Hinkanal zu sendenden Informationen, bei dem aus den Nachrichten je einer Teilnehmereinrichtung ein aus ATM-Zellen bestehender Datenstrom gebildet und in einen dieser Teilnehmereinrichtung zugeordneten Rückkanal umgesetzt und in das Verteilnetz (61,...., 64; Coax) eingespeist wird, bei dem in der Zentrale die Datenströme je eines Rückkanals als Folge von ATM-Zellen rückgewonnen und zwischengespeichert werden und bei dem die Datenströme aller Rückkanäle zu einem Gesamt-ATM-Datenstrom zusammengefaßt werden, **dadurch gekennzeichnet, daß** mehrere Rückkanäle gemeinsam in synchroner Zeitmultiplextechnik übertragen werden, wobei innerhalb der jeweils zugeteilten Zeitschlitze die Übertragung kompletter ATM-Zellströme mit ausschließlich kompletten Zeilen einschließlich der Zellköpfe erfolgt.

5. Verfahren nach Anspruch 4, **dadurch gekennzeichnet, daß** die Anzahl der einer der Teilnehmereinrichtungen zugeordneten Rückkanäle von der Zentrale dynamisch verändert wird.

6. Verfahren nach Anspruch 5, **dadurch gekennzeichnet, daß** eine der Teilnehmereinrichtungen an die Zentrale über einen ihr zugeordneten Rückkanal eine Nachricht sendet, auf den hin die Zentrale die Zahl der dieser Teilnehmereinrichtungen zugeordneten Rückkanäle verändert.

7. Verfahren nach Anspruch 4, **dadurch gekennzeichnet, daß** die Zentrale über zusätzliche Hinkanäle Nachrichten an die Teilnehmereinrichtungen sendet.

8. Verfahren nach Anspruch 7, **dadurch gekennzeichnet, daß** die Zentrale über die zusätzlichen Hinkanäle ATM-Zellen transparent an die Teilnehmereinrichtungen sendet.

9. Verfahren nach Anspruch 4, **dadurch gekennzeichnet, daß** die in einem Rückkanal übertragenen Nachrichten verschlüsselt werden.

## Claims

1. System, particularly for multimedia services (MM) including a video-on-demand service (VoD), with a hub (20, Hub), a distribution network (61, ..., 64; Coax) and user terminals (30) connected to the latter, with broadband channels (61, 62) from the hub to the user terminals and narrowband return channels (63, 64) from the user terminals to the hub, in which each return-channel-enabled user terminal (30) has a transmitting device (81', 82', 83', 86') by means of which a datastream consisting of ATM cells is formed from the messages to be sent to the hub and is converted in a return channel assigned to this user terminal and is fed into the distribution network (Coax), in which the hub (20, Hub) has receiving devices (RFLT, ATM) by means of which the datastream of a return channel is in each case recovered as a sequence of ATM cells and intermediately stored, and in which the hub has a multiplexer (86) which combines the individual datastreams to form a total ATM datastream, **characterized in that** there are means for transmitting several return channels together in a synchronous time-multiplex technique, complete ATM cellstreams with exclusively complete cells, including the cell headers, being transmitted within the respectively assigned time slots.

2. User terminal (30), particularly for multimedia services (MM) including a video-on-demand service (VoD), with a receiving device for selecting one of several broadband channels and for receiving a broadband datastream transmitted therein, in which there is a transmitting device (81', 82', 83', 86') by means of which a datastream consisting of ATM cells is formed from the messages to be sent to a hub (20, Hub) and is converted into a narrowband return channel assigned to the user terminal and is fed into the distribution network (Coax), **characterized in that** the transmitting device is designed so that it transmits the return channel in such a way that it is transmitted, in a synchronous time-multiplex technique, together with several return channels of other user terminals, complete ATM cellstreams with exclusively complete cells, including the cell headers, being transmitted within the respectively assigned time slots.

3. Hub (20, Hub) for a system according to Claim 1, which has receiving devices (RFLT, ATM) by means of which the datastream of a narrowband return channel is in each case recovered as a sequence of ATM cells and intermediately stored and which has a multiplexer (86) which combines the individual datastreams to form a total ATM datastream, **characterized in that** the receiving devices are designed in such a way that they recover the individual return channels from a synchronous time multiplex common to several return channels, the synchronous time multiplex being designed such that complete ATM cellstreams with exclusively complete cells, including the cell headers, are transmitted within the respectively assigned time slots.

4. Method for a system according to Claim 1, in which information is transmitted to user terminals (30) by broadband in forward channels (61, 62) and in which the user terminals transmit messages to a hub (20, Hub) in narrowband return channels (63, 64), particularly for the selection of the information to be sent to them in a forward channel, in which a datastream consisting of ATM cells is formed from the messages of each user terminal and is converted into a return channel assigned to this user terminal and is fed into the distribution network (61, ..., 64; Coax), in which, in the hub, the datastreams of each return channel are recovered as a sequence of ATM cells and intermediately stored, and in which the datastreams of all return channels are combined to form a total ATM datastream, **characterized in that** several return channels are transmitted together in a synchronous time multiplex technique, complete ATM cellstreams with exclusively complete cells, including the cell headers, being transmitted within the respectively assigned time slots.

5. Method according to Claim 4, **characterized in that** the number of return channels assigned to one of the user terminals is dynamically changed by the hub.

6. Method according to Claim 5, **characterized in that** one of the user terminals transmits a message to the hub via a return channel assigned to it, in consequence of which the hub changes the number of return channels assigned to this user terminal.

7. Method according to Claim 4, **characterized in that** the hub transmits messages to the user terminals via additional forward channels.

8. Method according to Claim 7, **characterized in that** the hub transparently transmits ATM cells to the user terminals via the additional forward channels.

9. Method according to Claim 4, **characterized in that** the messages transmitted in a return channel are encrypted.

## Revendications

1. Système, en particulier pour des services multimédia (MM), y compris un service de vidéo à la carte (VoD), comprenant un central (20, Hub), un réseau de distribution (61, ..., 64 ; Coax) et des installations d'abonné (30) qui y sont connectés, avec des canaux à large bande (61, 62) entre le central et les installations d'abonné et des canaux retour à bande étroite (63, 64) entre les installations d'abonné et le central, dans lequel chaque installation d'abonné pouvant recevoir un canal retour (30) présente un dispositif d'émission (81', 82', 83', 86') au moyen duquel un flux de données composé de cellules ATM est formé à partir des messages à envoyer au central et converti dans un canal retour affecté à cette installation d'abonné et alimenté dans le réseau de distribution (Coax), dans lequel le central (20, Hub) présente des dispositifs de réception (RFLT, ATM) au moyen desquels respectivement le flux de données d'un canal retour est restitué comme une suite de cellules ATM et tamponné, et dans lequel le central présente un multiplexeur (86) qui regroupe les flux de données individuels en un flux de données ATM global, **caractérisé en ce qu'**il existe des moyens pour transmettre plusieurs canaux retour en même temps selon une technique de multiplexage temporel, la transmission de flux de cellules ATM complets s'effectuant à l'intérieur des tranches de temps respectivement attribuées avec des cellules exclusivement complètes, y compris les en-têtes de cellule.

2. Installation d'abonné (30), en particulier pour des services multimédia (MM), y compris un service de vidéo à la carte (VoD), comprenant un dispositif de réception pour sélectionner l'un de plusieurs canaux à large bande et pour recevoir un flux de données à large bande transmis sur celui-ci, dans laquelle il existe un dispositif d'émission (81', 82', 83', 86'), au moyen duquel un flux de données composé de cellules ATM formé à partir des messages à envoyer à un central (20, Hub), et converti dans un canal retour à bande étroite affecté à cette installation d'abonné et alimenté dans le réseau de distribution (Coax), **caractérisée en ce que** le dispositif d'émission est réalisé de telle sorte qu'il émet le canal retour de telle sorte qu'il est transmis en même temps que plusieurs canaux retour d'autres installations d'abonné selon une technique de multiplexage temporel synchrone, la transmission de flux de cellules ATM complets s'effectuant à l'intérieur des tranches de temps respectivement attribuées avec des cellules exclusivement complètes, y compris les en-têtes de cellule.

3. Central (20, Hub), pour un système selon la revendication 1, qui présente des dispositifs de réception (RFLT, ATM), au moyen desquels respectivement le flux de données d'un canal retour à bande étroite est restituée comme une suite de cellules ATM et tamponné, et qui présente un multiplexeur (86) qui regroupe les flux de données individuels en un flux de données ATM global, **caractérisé en ce que** les dispositifs de réception sont réalisés de telle sorte qu'ils restituent les canaux retour individuels à partir d'un multiplexage temporel synchrone commun à plusieurs canaux retour, le multiplexage temporel synchrone étant configuré de telle sorte qu'à l'intérieur des tranches de temps respectivement attribuées, la transmission de flux de cellules ATM complets est effectuée avec des cellules exclusivement complètes, y compris les en-têtes de cellule.

4. Procédé pour un système selon la revendication 1, dans lequel des informations sont envoyées en large bande sur des canaux aller (61, 72) à des installations d'abonné (30), et dans lequel les installations d'abonné envoient sur des canaux retour à bande étroite (63, 64) des messages à un central (20, Hub), en particulier pour sélectionner les informations à envoyer sur un canal aller, dans lequel un flux de données composé de cellules ATM est formé à partir des messages respectivement d'une installation d'abonné et converti en un canal retour affecté à cette installation d'abonné et alimenté dans le réseau de distribution (61, ..., 64 ; Coax), dans lequel les flux de données respectivement d'un canal de retour sont restitués et tamponnés dans le central comme une suite de cellules ATM, et dans lequel les flux de données de tous les canaux retour sont tous regroupés en un flux de données ATM global, **caractérisé en ce que** plusieurs canaux retour sont transmis en même temps selon une technique de multiplexage temporel synchrone, la transmission de flux de cellules ATM complets s'effectuant à l'intérieur des tranches de temps respectivement attribuées avec des cellules exclusivement complètes, y compris les en-têtes de cellule.

5. Procédé selon la revendication 4, **caractérisé en ce que** le nombre des canaux retour affectés à l'une des installations d'abonné est modifié de façon dynamique par le central.

6. Procédé selon la revendication 5, **caractérisé en ce que** l'une des installations d'abonné envoie un message au central à travers un canal retour qui lui est affecté, suite auquel le central modifie le nombre des canaux retour affectés à ces installations d'abonné.

7. Procédé selon la revendication 4, **caractérisé en ce que** le central envoie des messages aux installations d'abonné à travers des canaux aller supplémentaires.

8. Procédé selon la revendication 7, **caractérisé en ce que** le central émet des cellules ATM de façon transparente aux installations d'abonné à travers les canaux aller supplémentaires.

9. Procédé selon la revendication 4, **caractérisé en ce que** les messages transmis sur un canal retour sont codés.
